# EUROPEAN PATENT APPLICATION

(11) **EP 4 800 966 A1**
(43) Date of publication of application: **02.09.2026**
(21) Application number: 23813792.1
(22) Date of filing: 23.10.2023
(51) Int. Cl.: H04L 9/08

(54) **METHOD FOR GENERATING AND DISTRIBUTING AN AUTHENTICATED KEY THAT IS RESISTANT TO QUANTUM ATTACKS**

(71) Applicant: Arquimea Group S.A., 28850, Torrejón de Ardoz Madrid (ES)
(72) Inventor: PORTELA GARCÍA, Marta, 38320 SAN CRISTÓBAL DE LA LAGUNA (SANTA CRUZ DE TENERIFE) (ES); GONZÁLEZ VASCO, María Isabel, 28911 Leganés (Madrid) (ES); PÉREZ DEL POZO, Ángel, 28933 Móstoles (Madrid) (ES); MARRIAGA CASTILLO, Misael Enrique, 28933 Móstoles (Madrid) (ES); SEÑOR SÁNCHEZ, Jaime, 28006 Madrid (ES)
(74) Representative: Elion IP, S.L.
(86) International application number: PCT/ES2023/070623
(87) International publication number: WO 2025/088225

(57) **Abstract**

Method in a system comprising a series of leader nodes, *U̅,* which share a symmetric key *K̅* a number of user nodes *Uⱼ which are connected to a leader node and which* have assigned their corresponding associated public key *pkⱼ.* The method comprises:
- Declaration of a new session (1).
- Construction of the secret key (3-11) K of the session where each user among the leader nodes *U̅ₗ* ∈ *U̅* will at random uniformly generate a new contribution Xᵢ.
- Key transport, where the initiator node *U̅*₀ will run an *Encaps* algorithm with the public key *pkᵢ* and thus obtain a masking key *kⱼ* whereby the session key *K* is encrypted as *dⱼ = K ⊕ kⱼ.;* the initiator node *U̅*₀ sends (13) to each leader the cipher of *K* with the shared key *K̅* and the values of *dⱼ* together with encapsulations *cⱼ.* Each leader node sends *(dⱼ y cⱼ)* to all user nodes uj within U);
- Run (18) on each non-leader node or user nodes uⱼ of *Decaps (skⱼ, cⱼ)* to obtain *kⱼ,* and then compute dⱼ ⊕ kⱼ and store *K* as the output session key. Each leader node decrypts the received session key (17) using the symmetric key *K̅*.

## Description

### OBJECT OF THE INVENTION

The object of the present invention, as the title of the invention states, is a method for generating and distributing an authenticated key resistant to quantum attacks. This invention includes proposals that allow it to be applied in systems with limited computational resources, the use of the method not being limited to these systems but to any system that seeks to be resistant to quantum attacks.

The present invention is characterised by the nature, functionality and order followed in the actions necessary for the generation of an authenticated key that allows a group of devices, which can only communicate over a non-confidential network, to agree on a secret key to be used to protect further communication.

Therefore, the present invention is circumscribed within the field of encrypted communications by means of a key, and more specifically in the field of communication secured by means of secret keys.

### BACKGROUND OF THE INVENTION

Embedded systems and loT (Internet of Things) are sensitive to cybersecurity attacks, and advances in quantum technologies require effective solutions and tools to protect against attacks using quantum computing. This is essential in critical application environments where high levels of security are required. In addition, loT applications are characterised in that they have limitations in hardware resources and power consumption, which makes it difficult to

implement these solutions. This invention addresses these limitations by working in a restricted scenario with post-quantum cryptographic tools, which are cryptographic tools whose security is based on mathematical primitives that, as of today, are considered secure against quantum algorithms.

Post-quantum protocols for establishing keys between two users are known in the state of the art. These are the so-called 2-AKE (2-Authenticated Key Establishment) protocols, or simply AKE. This type of tool is widely studied and implemented, and is often used as a building block for the construction of more complex mechanisms (e.g. involving more than two users) through a generic compiler or protocol. An example is the Burmester and Desmedt compiler [1], which can be used to construct a group key establishment (GKE) algorithm by compiling a key exchange for two unauthenticated users, the Diffie-Hellman mechanism [2].

In the context of post-quantum group protocols, two different trends have been found in the state of the art, although most of them use the Burmester and Desmedt compiler. On the one hand, there are several constructions using Diffie-Hellman related isogenies between algebraic curves, as can be seen in [3] and [4]. On the other hand, a second line of work also uses compiled designs, but starts from two-user mechanisms based on lattices (see [5] and [6]).

It is also worth noting that there are constructions designed using as an essential part, instead of an AKE, a key encapsulation mechanism (KEM); two prominent examples are [6] and [7] (the latter is only secure if the quantum adversary is not present during execution).

However, there are no post-quantum proposals for Group Authenticated Key Establishment (GAKE) protocols in the loT framework. The loT scenario imposes several characteristics that are an obstacle for GAKE protocols, with these mechanisms being particularly sensitive to the instability of the set of users involved in each execution. There are post-quantum developments for dynamic GAKE (with users joining/leaving) and/or robust GAKE (wherein there may simply be unresponsive users at points in the execution), e.g. [8]. However, there are no works exploring the possibilities of implementing these protocols in constrained environments (limited in hardware resources and power consumption) such as loT applications.

IoT applications, by their nature, are not only particularly sensitive to attacks (classical and quantum) but can also present a wide range of complexity levels (wearable networks versus a swarm of drones, for example) that hinder the implementation of countermeasures against such attacks.

Therefore, it is the object of the present invention to overcome the drawbacks derived from Group Authenticated key establishment protocols for embedded and loT systems that are resistant to quantum attacks, by developing a procedure as described below and set forth in its essentiality in the first claim.

The object of the present invention is to overcome the described obstacles to securing communication in loT environments through the development of post-quantum secure group-authenticated key establishment protocols implementable in such environments. The following is a description of a process developed for that purpose and is set forth in its essentiality in the first claim.

### References

[1] M. Burmester and Y. Desmedt, "A Secure and Efficient Conference Key Distribution System (Extended Abstract)," in Advances in Cryptology - EUROCRYPT '94, Workshop on the Theory and Application of Cryptographic Techniques, Perugia, Italy, May 9-12, 1994, Proceedings, 1994, vol. 950, pp. 275-286. doi: 10.1007/BFb0053443.
[2] W. Diffie and M. E. Hellman, "New Directions in Cryptography," IEEE Transactions on Information Theory, vol. 22, no. 6, pp. 644-654, 1976, [Online]. Available: https://ee.stanford.edu/-hellman/publications/24.pdf.
[3] S. Furukawa, N. Kunihiro, and K. Takashima, "Multi-party Key Exchange Protocols from Supersingular Isogenies," in International Symposium on Information Theory and Its Applications, ISITA 2018, Singapore, October 28-31, 2018, 2018, pp. 208-212, doi: 10.23919/ISITA.2018.8664316.
[4] H. B. Hougaard and A. Miyaji, "Authenticated logarithmic-order supersingular isogeny group key exchange," International Journal of Information Security, 2021.
[5] J. I. Escribano Pablos, M. I. Gonzalez Vasco, M. E. Marriaga, and Á. L. del Pozo, "Compiled Constructions towards Post-Quantum Group Key Exchange: A Design from Kyber," Mathematics, vol. 8, no. 10, p. 1853, Oct. 2020, doi: 10.3390/math8101853.
[6] E. Persichetti, R. Steinwandt, and A. S. Corona, "From Key Encapsulation to Authenticated Group Key Establishment - A Compiler for Post-Quantum Primitives," Entropy, vol. 21, no. 12, p. 1183, 2019, doi: 10.3390/e21121183.
[7] M. I. G. Vasco, Á. L. P. del Pozo, and R. Steinwandt, "Group Key Establishment in a Quantum-Future Scenario," Informatica, vol. 31, no. 4, pp. 751-768, 2020, doi: 10.15388/20-INFOR427.
[8] R. Choi, D. Hong, S. Han, S. Baek, W. Kang, and K. Kim, "Design and Implementation of Constant-Round Dynamic Group Key Exchange" in IEEE Access, vol. 8, pp. 94610-94630, 2020, doi: 10.1109/ACCESS.2020.2993296.

### DESCRIPTION OF THE INVENTION

The object of the present invention is essentially contained in the independent claim and the different embodiments are contained in the dependent claims.

The present invention relates to a method of generating secret keys resistant to quantum attacks that can even be applied in electronic systems with limited computational resources, such as embedded systems and loT (Internet of Things). Therefore, said secret key generation method is performed or carried out by means of processing means disposed in each of the devices.

This invention is a solution for exchanging a cooperatively generated secret key between a set of interconnected devices in an authenticated manner.

In the following, all those values for which the set to which they belong is not specified, must be interpreted as binary strings (of zeros and ones).

We assume that there is a set of participants (IoT devices), U, of size n ∈ N among which we distinguish a special set of leader nodes, *U̅* of size *n̅* << n. It is assumed that the users within the leader nodes *U̅* satisfy the following conditions:
- they share a symmetric key (established a priori) *K̅* which is used to exchange information between the leader nodes in encrypted form. A possible implementation would use AES (Advanced Encryption Standard).
- they are connected through a complete communication network; i.e. we can assume that there is a communication channel connecting every two leaders

In addition, we make the following assumptions:
a. A post-quantum KEM (*Key Encapsulation Mechanism*) is used to exchange secrets between leader nodes and non-leader user nodes. Thus, for each user *uⱼ* ∈ *U \U̅* (nodes that do not belong to the set of leaders), there is a public key *pkⱼ* (certified) of node *j* known by the leader nodes *U̅,* and a secret key *skⱼ,* which is known only by node *uⱼ,* and is never shared or sent. The public key can be used by anyone to encrypt certain types of messages, but only those who have the corresponding secret key can decrypt said message.
b. All communication channels are authenticated (i.e. it is possible to verify the origin of each message received).
C. Each user *uⱼ* in *U \ U̅* can be contacted from at least one leader node *U̅*; i.e. there are sufficient communication channels linking each non-leader element to at least one leader node.
d. For each key size $N ∈ ℕ$ there is a finite fixed body 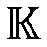 and a hash function $H : K \to {\left\{0,1\right\}}^{N}$, both publicly known.
e. The users *uⱼ* are identified by means of indexes, which are of public knowledge.

Given all the above, we will consider a fixed threshold *α*∈ N, which is the number of leader nodes *U̅ₗ,* within the leader set *U̅* required to contribute to the construction of the key to be generated. In other words, if the final key is influenced by a number of leaders less than *α*, this key will not be set as a valid group key for further use within U.

After the collaborative key construction by different nodes, the basic idea is a secure key transport from the leader nodes *U̅ₗ* from *U̅* to all other users *uⱼ,* so that, with overwhelming probability, the key reaches all nodes in U. In detail, the process involves the following steps:
**Initial step:** Any node *U̅*₀ of the set of leader nodes *U̅* declares a new session activated by transmitting a start message within *U̅,* i.e. from among the leader nodes *U̅* there is a node *U̅*₀ that starts a new secret key generation session, which we will call the initiator node *U̅*₀.
**Key construction:** each user from among the leader nodes *U̅ₗ* ∈ *U̅* will at random uniformly generate a new contribution ${X}_{i} ∈ K$, which it will transmit within *U̅* in encrypted form using a symmetric encryption mechanism and the key shared a priori *K̅*. In other words, each leader node *U̅ₗ* provides the initiator node *U̅*₀ with material for the generation of the secret key of the session *K* by means of a random *stream,* where, furthermore, this material supplied to the initiator node *U̅*₀ is also communicated among the other leader nodes *U̅* in encrypted form. In one possible embodiment, if there are sufficient contributions of this type arriving at initiator node *U̅*₀, the key *K* is constructed as a *hash* or summary of the concatenation or sum of such contributions Xᵢ.

However, if contributions lower than a threshold *α* are recovered, then the initiator node *U̅*₀ will request the missing contributions in a second **retrieval phase.** If the threshold *α* is not reached again , the execution will end with an error message. Otherwise, the key will be constructed by means of a *hash* function applied to the contributions received.

**Key transport:** In this phase, the key generated at the initiator node *U̅*₀ is cryptographically securely transported to all nodes in the network over several steps, both to the other leader nodes *U̅ₗ* and to the non-leader user nodes *uⱼ*.

To ensure that all leaders receive said key, the initiator node *U̅*₀ sends the session key K encrypted using a symmetric encryption mechanism to the other users and the symmetric key *K̅* that all leaders share.

In order to deliver the key to the non-leader nodes (of the set *U\U̅*)*,* a post-quantum key encapsulation mechanism or KEM is used. First, the initiator node *U̅*₀ will execute a key encapsulation algorithm, *Encaps,* which from each user's public key *pkⱼ uⱼ* (from the set *U\U̅*), generates a secret *kⱼ,* and its encapsulated value *cⱼ*, known as ciphertext. $∀ {U}_{j} \left({c}_{j}, {k}_{j}\right) = Encaps \left({pk}_{j}\right)$

Secondly, *U̅*₀ uses that secret kⱼ generated by the encapsulation function. as a mask to encrypt the session key *K* as *dⱼ = K ⊕ kⱼ.* (where ⊕ is an XOR, i.e., binary sum of two sequences).

Third, the initiator node *U̅*₀ sends to the leader nodes *U̅* the list of all these ciphers *dⱼ,* together with the encapsulations *cⱼ* of the corresponding masking key.

Finally, the leader nodes *U̅* send these messages to the user nodes (of the set *U\U̅*) whereto they are connected, so that the constructed key reaches all nodes within U.

**Final key calculation:** Any user *uⱼ* ∈ *U\U̅* upon receiving (cⱼ, dⱼ), i.e. the encapsulated secret and the masked session key, executes the Decapsulation function, *Decaps(skⱼ, cⱼ),* to obtain *kⱼ,* and thus be able to calculate *K := dⱼ ⊕ kⱼ.* $\left({c}_{j}, {k}_{j}\right) = Decap \left({sk}_{j}, {c}_{j}\right)$ $K = {d}_{j} ⊕ {k}_{j}$

In addition, each leader node decrypts the session key *K* received from the initiator encrypted with a symmetric AES (Advanced Encryption Standard) mechanism and the symmetric key *K̅*.

*K* is stored on each node as the output session key.

The different symbols used in the description are defined below:
***K*** → *session key. It is the key that is jointly generated by the group and securely shared among all parties. It is a single value per session.*
***K̅*** → *symmetric key shared a priori by the leader nodes. To be used in symmetric encryption of messages between leader nodes.*
***Xi*** → *random bit string generated by the leader node U̅ₗ to be used* as a *contribution to the generation of the session key.*
***CXi* →** *represents the result of encrypting the contribution Xi with a symmetric cipher applying the secret key **K̅***. *That ciphertext is what is sent to the initiator node* so *that the initiator node can decrypt it (e.g. with the decryption function of the AES cipher): DEC_AES)*
***kj*** → *is a secret value generated for each user in the network, not a leader. This is one of the results of the KEM mechanism. It is used to mask the secret key K so that it can be securely transmitted by the leader to node j. Only node j will know this value kj and will, therefore, be able to decrypt messages that have been masked with kj.*
***cj*** →*encrypted text generated by the Encapsulation function from a public key pki. With cj and the corresponding secret key skj, the user node Uⱼ node uses a Decapsulation function* to recover the shared secret *kj.*
***dj*** → *masked value of the session key K. It is the value that is transmitted to the user nodes uⱼ* ∈ *U\U̅. It is calculated by an exclusive or operation between the value to be encrypted (K) or secret key of the session and the secret mask kj.*
***pkj*** / ***skj**→is the public* / *secret key of node j. A public key encapsulation mechanism (KEM) is used to exchange the session key securely. The public key **(pkj)** can be used by anyone to encrypt messages, but only those who have the corresponding secret key **(skj)** can decrypt said message.*

If the method is used in systems with limited computational resources, a device is considered to have limited computational resources when any of the following conditions are met (although the values indicated may vary over time):
- Consumption is battery-based, which at most would be in the order of tens of watts in general.
- The processing capacity takes place at a maximum speed in the order of several hundred MHz.
- The processing devices have some of these options:
   o microcontrollers of no more than 2 DMIPS /MHz typically, where DMIPS refers to Millions Instructions per Second of Dhrystone type (or alternatively, 5 CoreMark/MHz, if the CoreMark benchmark is used).
   ∘ FPGA (Field Programmable Gate Array) is a complex programmable digital integrated circuit composed of configurable logic blocks (CLB) and input/output ports (IOB), whose interconnection and functionality can be programmed by means of a specialised description language, which in the case of applications considered could have up to 70,000 logic cells.
- These systems usually have no more than a few Mbytes of flash memory and 512 Kbytes of SRAM

Preferably but not limited thereto, devices are considered to have limited computational resources when:
- Consumption is based on batteries, which at most would be in the order of tens of watts, and/or
- Usually no more than a few Mbytes of flash memory and about 512 Kbytes of SRAM are available

Unless indicated otherwise, all the technical and scientific elements used in this specification have the meaning usually understood by a person skilled in the art to which this invention belongs. In the practice of this invention, methods and materials similar or equivalent to those described in the specification may be used.

In the description and claims, the word "comprises" and its variants do not intend to exclude other technical characteristics, additives, components or steps. For persons skilled in the art, other objects, advantages and

characteristics of the invention will be partly inferred from the description and partly from the practice of the invention.

### EXPLANATION OF THE FIGURES

In order to complement the description being made herein, and with the object of aiding the better understanding of the characteristics of the invention, in accordance with a preferred practical embodiment thereof, said description is accompanied, as an integral part thereof, by a set of drawings where, in an illustrative and non-limiting manner, the following has been represented:
In Figure 1, we can see a simplified drawing of the different devices that are part of the system where there are a series of leader nodes and user or non-leader nodes.
Figure 2 shows the stages of the method for generating and distributing a secret key.

### PREFERRED EMBODIMENT OF THE INVENTION

In view of the figures, a preferred embodiment of the proposed invention is described below.

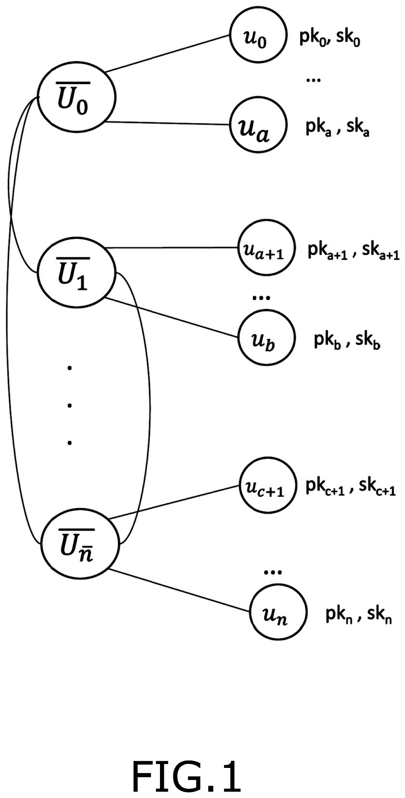

In Figure 1 we can observe a series of leader nodes, *U̅ = U̅*₀, *U̅*₁,..., *U̅*ₙ of size *n̅* << n, where all of them share a symmetric key (established a priori) *K̅* and full communication between them is ensured, either through a direct link or through other leader node(s). In addition, there are a number of user or non-leader nodes *uⱼ* = *u₀... uₐ; uₐ₊₁.... u_{b}; u_{c+1}... uₙ* which *are connected to a leader node,* where user or non-leader nodes are assigned their corresponding associated public key *pk₀... pkₐ; pkₐ₊₁... pk_{b} ;pk_{c+1}... pkₙ* and their secret key *sk₀... skₐ; skₐ₊₁... sk_{b} ;sk_{c+1}... skₙ* Public keys are known or accessible to any node, while secret keys never exit the corresponding node.

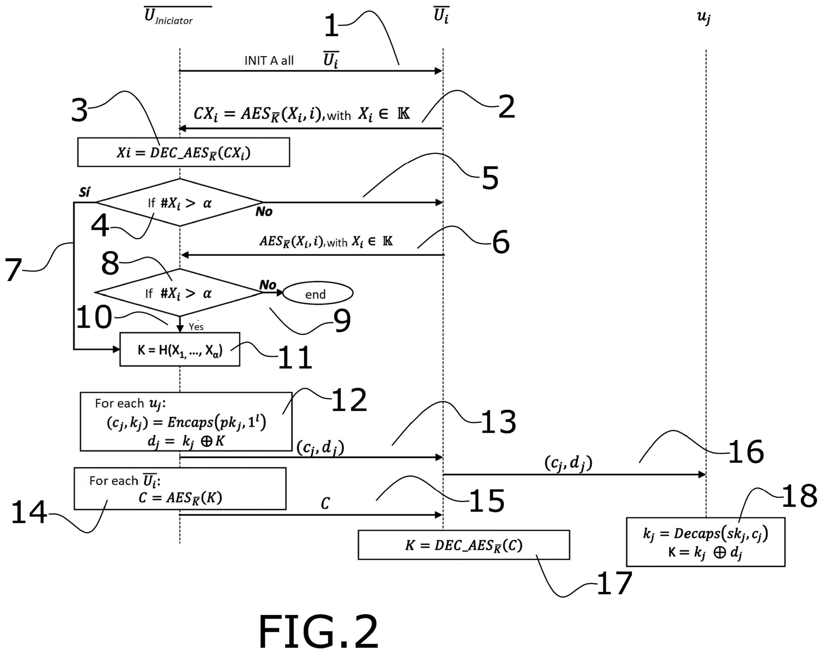

Figure 2 shows the entire process, which is carried out by means of processing means disposed in each of the devices and which comprises the following phases:
- Declaration of a new session (1) by any node *U̅*₀ from among the leader nodes *U̅* which we will call initiator node *U̅*₀. Startup is declared by transmitting a start message to all nodes of the leader set *U̅*.
- Random generation of contributions ${X}_{i} ∈ K$ from the leader nodes and transmission (2) of these contributions from the leader nodes *U̅ₗ̅* to the initiator node *U̅*₀. The transmission of the contributions X to the initiator node is performed by a symmetric cipher applying the secret key *K̅* (e.g. AES) where CXᵢ is the result of the encryption process.
- Decryption process (3) of the value CXᵢ by the initiator node *U̅*₀ to obtain from the contributions, Xᵢ, of each leader node, *U̅ₗ̅*. A symmetric encryption mechanism is used for this purpose, for example, an AES cipher (DEC_AES() function) and the key shared a priori by the leaders *K̅* a priori by the leaders *U̅ₗ̅*.
- First verification (4) whether the number of contributions Xᵢ is greater than a threshold *α*. Should a sufficient number of contributions not be reached, a retrieval phase is resorted to where more contributions are requested (5). If new contributions are available, they are sent (6) symmetrically encrypted (AES) to the leader node.
- second verification (8) of whether the number of contributions Xᵢ is above a threshold *α*. If a sufficient number of contributions are not received, the process (9) is considered finalised.
- In the event that in the first (4) or second verification (8) the number of contributions of each leader node *U̅*ᵢ is higher than a threshold α (7) (10), the secret key *K* (11) is constructed by means of a hash function or summary of the concatenation or sum of the contributions.
- Key transport where:
   o First (12), the initiator node *U̅*₀ will execute an *Encaps* key encapsulation algorithm, which from the public key pkj of each user uⱼ (of the set *U\U̅*) generates a secret kⱼ*,* and its encapsulated value cⱼ, known as ciphertext. $∀ {U}_{j} \left({c}_{j}, {k}_{j}\right) = Encaps \left({pk}_{j}\right)$
   ∘ The secret to be shared thus generated *kⱼ,* is used as a masking key to encrypt the session key *K* as *dⱼ = K ⊕ kⱼ.* Both values, (*cⱼ, dⱼ*), are sent (13) from the initiator node to the rest of the leader nodes *U̅*.
   o Secondly (14), the initiator node *̅U̅*̅₀̅ encrypts by means of a symmetric mechanism the session key *K* with the symmetric key *K̅* and sends it (15) to the other leader nodes.
   ∘ Thirdly (16), the leader nodes *U̅* send the ciphers *dⱼ* together with the encapsulations *cⱼ* to the user nodes uⱼ of U \ *U̅* whereto they are connected. This ensures that the constructed key *K* reaches all nodes within U.
- Execute (18) on each non-leader node or user nodes uⱼ of the decapsulation function, *Decaps (skⱼ, cⱼ),* to obtain *kⱼ,* and then compute *K := dⱼ ⊕ kⱼ* and store *K* as the output session key. Each leader node (17) decrypts the received session key using the symmetric key (DEC_AES(C) function) *K̅* (DEC_AES(C) function). In this way, all nodes in the network, both leaders and non-leaders, have the session key *K.*

Having sufficiently described the nature of the present invention, in addition to the manner in which to put it into practice, it is hereby stated that, in its essence, it may be put into practice in other embodiments that differ in detail from that indicated by way of example, and to which the protection equally applies, provided that its main principle is not altered, changed or modified.

## Claims

1. A method of generating and distributing a secret key resistant to quantum attacks, which is implemented in a system comprising:
- a set of participants or loT devices, U, of size n ∈ N among which we distinguish a special set of leader nodes, *U̅* of size *n̅* << n. It is assumed that the users within the leader nodes *U̅* satisfy the following conditions:
o they share a symmetric key (established a priori) *K̅* that they use to transmit encrypted messages to each other.
∘ there is a link connecting every two leaders
- a set of participants or loT device *uⱼ ∈ U \ U̅,* which each has a public key *pkⱼ* known by the leader nodes *U̅,* and which is part of a post-quantum key encapsulation mechanism or KEM
where:
- All communication channels are authenticated.
- Each user *uⱼ* in *U \ U̅* can be contacted from at least one leader node *U̅*; i.e. there are sufficient communication channels linking each non-leader element to at least one leader node.
- For each key size $N ∈ ℕ$ there is a finite fixed field 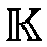 and a hash function $H : K \to {\left\{0,1\right\}}^{N}$, both publicly known.
- Users are identified by means of indexes, which are of public knowledge.
Wherein the method of key generation and establishment is performed by means of processing means disposed in each of the devices and comprises the following steps:
- Declaration of a new session (1) by any node *U̅*₀ from among the leader nodes *U̅* which we will call initiator node, by transmitting a start message within *U̅,*
- Random generation of contributions ${X}_{i} ∈ K$ from the leader nodes *U̅ₗ̅* that will transmit (2) to the initiator node *U̅*₀, where such contribution is the material used for the generation of the secret key of session *K*.
- Verification of whether the number of contributions Xᵢ is greater than a threshold *α*.
- If the contributions Xᵢ are higher than a threshold *α* the secret key is constructed (11): where the initiator node *U̅* ₀ will generate the secret key of session K by means of a hash function of the contributions.
- Key transport where:
o First (12), the initiator node *U̅*₀ will execute a key encapsulation algorithm, *Encaps,* which from the public key pkj of each user uⱼ (of the set *U\U̅*) generates a secret kⱼ, and its encapsulated value cj, known as ciphertext. $∀ {U}_{j} \left({c}_{j}, {k}_{j}\right) = Encaps \left({pk}_{j}\right)$
∘ The secret to be shared thus generated *kⱼ,* is used as a masking key to encrypt the session key *K* as *dⱼ = K ⊕ kⱼ.* Both values, *(cⱼ, dⱼ*), are sent (13) from the initiator node to the rest of the leader nodes *U̅*.
o Secondly (14), the initiator node *̅U̅*̅₀̅ encrypts by means of a symmetric mechanism the session key *K* with the symmetric key *K̅* and sends it (15) to the other leader nodes.
∘ Thirdly (16), the leader nodes *U̅* send the ciphers *dⱼ* together with the encapsulations *cⱼ* to the user nodes uⱼ of U \ *U̅* whereto they are connected. This ensures that the constructed key *K* reaches all nodes within U.
- Execution (18) on each non-leader node or user nodes uⱼ of the decapsulation function, *Decaps (skⱼ, cⱼ),* to obtain *kⱼ,* and then compute *K :*= *dⱼ ⊕ kⱼ* y and store *K* as the output session key,
- Each leader node (17) decrypts the received session key using the symmetric key *K̅*. In this way, all nodes in the network, both leaders and non-leaders, have the session key *K.*

2. Method of generating and distributing a secret key resistant to quantum attacks according to claim 1, **characterised in that** the stage of verifying whether the number of contributions Xᵢ is greater than a threshold *α* comprises:
- A first verification (4) of whether the number of contributions Xᵢ is higher than a threshold *α*, should a sufficient number of contributions not be reached, a retrieval phase is used where more contributions are requested (5),
- A second verification (8) of whether the number of contributions Xᵢ is higher than a threshold *α* if a sufficient number of contributions is not reached, the process (9) is considered finalised,
in the event that in the first (4) or second verification (8) the number of contributions of each leader node *U̅*ᵢ is higher than a threshold *α* (7)(10) the secret key *K* (11) is constructed.

3. A method for generating and distributing a secret key resistant to quantum attacks according to claim 1 or 2, **characterised in that** the transmission of the contributions Xᵢ to the initiator node is carried out by means of a symmetric cipher applying the secret key *K̅* where CXᵢ is the result of the encryption process, followed by a decryption process (3) of the value CXᵢ by the initiator node *U̅*₀ to obtain from the contributions, Xᵢ, of each leader node, *U̅ₗ̅* using a symmetric encryption mechanism for this.

4. Method of generation and distribution of a secret key resistant to quantum attacks according to claim 1 or 2, **characterised in that** the symmetric cipher is the AES function while for decryption the (DEC_AES (C)) function is used.

5. System resistant to quantum attacks that applies the method according to any of the preceding claims, **characterised in that** the system comprises:
- a set of participants or loT devices, U, of size n ∈ N among which we distinguish a special set of leader nodes, *U̅* of size *n̅* << n. It is assumed that the users within the leader nodes *U̅* satisfy the following conditions:
∘ they share a symmetric key (established a priori) *K̅* that they use to transmit encrypted messages to each other.
∘ there is a link connecting every two leaders
- a set of participants or loT device *uⱼ* ∈ *U \ U̅,* which each has a public key *pkⱼ* known by the leader nodes *U̅,* and which is part of a post-quantum key encapsulation mechanism or KEM
where:
- All communication channels are authenticated.
- Each user *uⱼ* in *U \ U̅* can be contacted from at least one leader node *U̅*; i.e. there are sufficient communication channels linking each non-leader element to at least one leader node.
- For each key size $N ∈ ℕ$ there is a finite fixed field 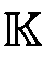 and a hash function $H : K \to {\left\{0,1\right\}}^{N}$, both publicly known.
- Users are identified by means of indexes, which are of public knowledge.
And the above claimed method is applied.

6. Use of the method according to any one of claims 1-4 and in systems according to claim 5, **characterised in that** the devices are battery powered and have a flash memory not exceeding 512 Kbytes of SRAM.
